**Europäisches Patentamt**

**European Patent Office**

**Office européen des brevets**

(19)

(11) Veröffentlichungsnummer: **0 665 241 A2**

# EUROPÄISCHE PATENTANMELDUNG

(12)

(21) Anmeldenummer: **95100428.2**

(22) Anmeldetag: **13.01.95**

(51) Int. Cl.⁶: **C08F 8/06**, C08F 210/10

(30) Priorität: **26.01.94 DE 4402188**

(43) Veröffentlichungstag der Anmeldung:
**02.08.95 Patentblatt 95/31**

(84) Benannte Vertragsstaaten:
**AT BE CH DE ES FR GB IT LI NL**

(71) Anmelder: **BAYER AG**

**D-51368 Leverkusen (DE)**

(72) Erfinder: **Weider, Richard, Dr.**
**Ouettinger Strasse 78**
**D-51381 Leverkusen (DE)**
Erfinder: **Scholl, Thomas, Dr.**
**Alte Wipperfürther Strasse 24a**
**D-51469 Bergisch Gladbach (DE)**
Erfinder: **Köhler, Burkhard, Dr.**
**Mündelheimer Strasse 94**
**D-47829 Krefeld (DE)**
Erfinder: **Jansen, Bernhard, Dr.**
**Roggendorfstrasse 65**
**D-51061 Köln (DE)**

(54) **Einstufenverfahren zur Herstellung von Polyisobutylen-Carbonsäuren.**

(57) Gegenstand der vorliegenden Erfindung ist ein einstufiges Verfahren zur Herstellung von Polyisobutylen-Carbonsäuren aus Isobutylen-Dien-Copolymeren, die gegebenenfalls mittels eines Diolefins in bekannter Weise vernetzt oder verzweigt sind, durch Umsetzung mit Ozon in Gegenwart eines Lösungsmittels.

EP 0 665 241 A2

Gegenstand der vorliegenden Erfindung ist ein Verfahren zur Herstellung von Polyisobutylen-Carbonsäuren mit mittleren Molekulargewichten $\overline{M}n$ (Zahlenmittel, ermittelt durch Gelpermeationschromatographie) von 300 bis 20.000, vorzugsweise von 1.000 bis 15.000, und mit einem Gehalt an Carbonsäuregruppen zwischen 0,5 Mol und 5 Mol, vorzugsweise zwischen 0,8 Mol bis 5 Mol, bezogen auf 1 Mol Polyisobutylen-Carbonsäure, das dadurch gekennzeichnet ist, daß man hochmolekulare Isobutylen-Dien-Copolymere mit $\overline{M}n$ >20.000, die 0,3 Mol-% bis 15 Mol-%, vorzugsweise 0,5 Mol-% bis 10 Mol-% Dien einpolymerisiert enthalten, pro Mol Isobutylen-Monomer, und die gegebenenfalls mittels eines Diolefins in bekannter Weise vernetzt oder verzweigt sind, mit 0,3 Mol-% bis 50 Mol-%, vorzugsweise mit 0,5 Mol-% bis 30 Mol-% Ozon pro Mol Isobutylen bei Temperaturen von -100°C bis +70°C, vorzugsweise von -20°C bis +30°C, unter Einhaltung von Reaktionszeiten von wenigen Sekunden bis 10 Stunden, in Gegenwart eines Lösungsmittels für die sich bildende Polyisobutylen-Carbonsäure umsetzt.

Die so erhaltenen Polyisobutylen-Carbonsäuren haben Säurezahlen zwischen 2 und 250, vorzugsweise 5 und 100 und insbesondere 5 und 60. Sie enthalten nicht mehr als 5 Carboxylgruppen pro Molekül.

Die erfindungsgemäß erhältlichen, unverzweigten Polyisobutylen-Carbonsäuren sind im Prinzip bekannt, sie können für organische Synthesen verwendet werden, beispielsweise als Bausteine in Polymeren, oder als Additive, beispielsweise als Weichmacher in Kautschuken.

Nicht bekannt sind die vernetzten oder verzweigten Polyisobutylen-Carbonsäuren.

Gegenstand der vorliegenden Erfindung sind somit auch vernetzte oder verzweigte Polyisobutylen-Carbonsäuren erhältlich nach dem Verfahren der vorliegenden Erfindung. Auch diese neuen Polyisobutylen-Carbonsäuren können wie die bereits bekannten technisch verwendet werden.

Aus US-PS 3 392 154 ist die Oxidation von ungesättigten Polyisoolefinen in einem Mehrstufenverfahren mit Ozon zur Herstellung von OH- oder COOH-Gruppen-haltigen Polyolefinen bekannt.

Aus US-PS 3 427 351 ist ebenfalls ein Mehrstufenverfahren durch Ozonolyse eines Isobutylen-Isopren-Copolymeren bekannt. Die erhaltenen Produkte sind bis-carboxyl-terminierte Polyolefin-Carbonsäuren.

Aus der DE-OS 2 147 874 ist ein Verfahren zur Herstellung von Carboxylgruppen-haltigen Isoolefin-Polymerisaten bekannt. Die Herstellung mit Ozon erfolgt ebenfalls mehrstufig.

Aus der FR 2 235 952 ist ebenfalls die Oxydation mit Ozon bekannt. Oxydiert werden PVC, polychloriertes Polyethylen und ähnliche chlorierte Polymere.

In der europäischen Patentanmeldung 0 012 316 wird eine Arbeitsweise zur Herstellung von gesättigten Carboxyl- oder Hydroxyendgruppen enthaltenden Polymeren durch Ozonisierung der Lösung eines ein Dien enthaltenden Olefincopolymeren in einem speziellen Lösungsmittelgemisch bei erhöhter Temperatur und anschließender Spaltung der Ozonide durch Oxidation mittels eines zweiten Oxidationsmittels (S. 19, Z. 25 ff.), bevorzugt Peroxosäuren bei erhöhter Temperatur (S. 20, Z. 15 ff.) zu Carboxyl- und/oder Reduktion mittels komplexer Hydride zu Hydroxylgruppen beschrieben. Auch hier ist ein zweiter Oxidationsschritt und eine Reinigung des Produktes durch Fällung in Methanol und Waschen erforderlich (S. 20, Z. 19 ff.). Dieses Verfahren ist somit ebenfalls aufwendig und birgt zudem ein hohes Explosionsrisiko in sich, da die erforderlichen Temperaturen sowohl bei der Ozonolyse als auch bei der Oxidation nahe an den Zündpunkten der verwendeten Lösemittel liegen (z.B. Beispiel 1 obiger Patentanmeldung: Zündpunkt Dekalin: 270°C, Arbeitstemperatur: 80-125°C).

Aus der DE-OS 4 122 655 (Le A 28 403) ist die Herstellung von speziellen, funktionalisierten Polyisobutylenen bekannt, die aber keine Carboxylgruppen tragen.

Das erfindungsgemäße Verfahren ist unseres Erachtens aus dem Stand der Technik weder bekannt noch nahegelegt.

Vielmehr war es überraschend, daß man sehr selektiv Carboxylgruppen-haltige Polyisobutylene hoher Reinheit mit sehr genau einstellbarem Carboxylgruppengehalt in einem Einstufenverfahren erhält, indem man ein Dien-Isobutylen-Copolymer in Gegenwart eines Lösemittels mit einem Überschuß Ozon behandelt. Dabei entstehen unmittelbar die gewünschten Carbonsäuren in hoher Reinheit und definierter Funktionalität, ohne daß ein zweites Oxidationsmittel eingesetzt werden muß. Durch die alleinige Verwendung von Ozon zur Herstellung der Carbonsäuren entstehen keine weiteren Reaktionsprodukte, die durch einen Reinigungsschritt entfernt werden müßten. Die bei dem erfindungsgemäßen Verfahren erhaltenen Lösungen können unmittelbar eingedampft werden, wobei eine nahezu vollständige Rückgewinnung des Lösemittels möglich ist. Für Folgereaktionen an den Carbonsäuren können die Lösungen auch unmittelbar als solche eingesetzt werden, ohne daß Verunreinigungen auf die Folgeprodukte übertragen werden.

Das erfindungsgemäße Verfahren wird also an einem hochmolekularen, flüssigen oder festen Isobutylen-Dien-Copolymer durchgeführt, welches durch Copolymerisation von Isobutylen mit 0,3 bis 15 Mol-%, bezogen auf 1 Mol Isobutylen-Monomer, eines konjugierten, gegebenenfalls in 2- oder 3-Stellung substituierten, jedoch mindestens in einer der 2- oder 3-Positionen Wasserstoff enthaltenden, konjugierten $C_4$-$C_{14}$-Diens, wie beispielsweise Butadien, Isopren, 2-Chlorbutadien-(1,4), 2-Brom-butadien-(1,4), Pentadien, Hexadien, 2-Ethylbutadien-(1,3), 2-Propylbutadien-(1,3), 2-Phenylbutadien-(1,3), 2-Methylpentadien-(1,3) oder 3-Propylhexadien-(1,3), erhältlich und beispielsweise unter der Bezeichnung Butylkautschuk kommerziell verfügbar ist. Das Dien liegt dabei im wesentlichen in der 1,4-Position verknüpft vor. Geringe Anteile 1,2-Verknüpfung, wie sie in allen kommerziell erhältlichen Butylkautschuken vorhanden sind und die sich nicht vollständig unterdrücken lassen, führen zu ebenfalls geringen Anteilen seitenständiger Carboxylgruppen. Bevorzugtes Dien ist Isopren. Die Herstellung von Butylkautschuk wird beispielsweise in dem US-PS 2 356 128 beschrieben.

Die vernetzend oder verzweigend wirkenden Diolefine sind gegebenenfalls in Mengen von 0,1 Mol-% bis 10 Mol-%, vorzugsweise in Mengen von 0,1 Mol-% bis 5 Mol-%, bezogen auf 1 Mol Isobutylen-Monomer, einpolymerisiert.

Geeignete Diolefine sind beispielsweise Divinylbenzol oder andere Divinylaromaten wie Divinyltoluol, Divinylxylol, Diisopropenylbenzol oder Divinylnaphthylen.

Bevorzugtes Diolefin ist Divinylbenzol.

Derartige, erfindungsgemäß einzusetzende vernetzte oder verzweigte Terpolymere sind unlöslich und ebenfalls unter der Bezeichnung Butylkautschuk kommerziell verfügbar und z.B. in der US-PS 2 781 334 beschrieben.

Die als Ausgangsprodukte für das erfindungsgemäße Verfahren verwendeten Isobutylen-Dien-Copolymeren, die wie vorstehend erwähnt gegebenenfalls vernetzt oder verzweigt sein können, haben Molekulargewichte $\overline{M}n$ (Zahlenmittelmolekulargewicht) von mindestens 20.000 (ermittelt durch Gelpermeationschromatographie).

Das Molekulargewicht kann in weiten Grenzen variieren und reicht bei den nicht vernetzten Ausgangspolymeren bevorzugt von $\overline{M}n$ 100.000 bis 1.000.000.

Die vernetzten Ausgangspolymere entziehen sich einer Molekulargewichtsbestimmung. Derartige vernetzte Butylkautschuke lassen sich über den Gelgehalt charakterisieren. Der Gelgehalt liegt hierbei zwischen 50 %-100 %, bevorzugt 60 %-90 %, ermittelt durch Bestimmung des in Cyclohexan löslichen Anteils.

Das erfindungsgemäße Verfahren wird im einzelnen wie folgt durchgeführt: Das jeweils als Ausgangsmaterial einzusetzende Isobutylen-Dien-Copolymer wird mittels einer Ozon enthaltenden gasförmigen Strömung ozonisiert, die in einem üblichen Ozongenerator aus reinem Sauerstoff oder einem Sauerstoff enthaltenden trockenen Gasgemisch, wie z.B. Luft, erzeugt wird. Der Ozongehalt beträgt bis zu 15 Vol.-%, bevorzugt zwischen 0,5 und 10 Vol.-%.

Das Copolymere wird dabei in einem organischen Lösungsmittel, vorzugsweise einem gesättigten, gegebenenfalls halogenierten aliphatischen oder cycloaliphatischen Kohlenwasserstoff oder Ether oder Ester oder einem halogenierten aromatischen Kohlenwasserstoff gelöst oder suspendiert. Geeignete Lösungsmittel sind z.B. Pentan, Hexan, Heptan, Octan, Cyclohexan, Leichtbenzine, Petrolether, Tetrahydrofuran, Methylenchlorid, Chloroform, Tetrachlormethan, Tetrachlorethan, Chlorbenzol, Butylacetat oder Gemische daraus. Bevorzugt wird Hexan, Octan oder Methylenchlorid verwendet. Die Konzentration des Copolymeren im Lösungsmittel wird so gewählt, daß die Viskosität der Lösung zur Dispersion des Ozon-führenden Gases geeignet ist. Bevorzugt liegt sie zwischen 5 Gew.-% und 30 Gew.-%.

In einer bevorzugten Ausführungsform des erfindungsgemäßen Verfahrens wird das Ausgangsmaterial jedoch nicht vor der Ozonbehandlung in dem Lösungsmittel gelöst, sondern beispielsweise in üblichen Schneidmühlen grob zerkleinert und in einer entsprechenden Menge des Lösungsmittels nur suspendiert. Der Lösevorgang erfolgt dann während der Ozonbehandlung. Durch diese Vorgehensweise wird ein zeitaufwendiger Löseschritt gespart und zu hoch viskose Lösungen, die eine gute Durchmischung mit dem ozonhaltigen Gas erschweren, werden vermieden. In Gegenwart von Ozon wird das Auflösen des Isobutylen-Dien-Copolymers zudem wesentlich beschleunigt.

Ein weiterer Vorteil dieser Vorgehensweise besteht darin, daß auch Lösungsmittel verwendet werden können, in denen zwar die verfahrensgemäß erhaltenen Carbonsäuren löslich sind, in denen aber die Ausgangspolymeren nicht oder nur schlecht löslich sind.

Diese Verfahrensvariante eignet sich somit auch für die erfindungsgemäße Ozonbehandlung der vernetzten und deshalb unlöslichen Isobutylen-Dien-Diolefin-Terpolymeren.

Die Menge an einzusetzendem Ozon kann, wie eingangs angegeben, in gewissen Grenzen variieren. Sie richtet sich im einzelnen nach dem Grad der Ungesättigtheit der Isobutylen-Dien-Copolymeren, die als Ausgangsprodukte eingesetzt werden. Sie richtet sich auch nach dem gewünschten Gehalt an Carboxylgruppen im erfindungsgemäß herzustellenden Verfahrensprodukt.

Der Grad der Ungesättigtheit der Ausgangsprodukte liegt im allgemeinen zwischen 0,3-15 Mol-%, bevorzugt 0,5-10 Mol-%, besonders bevorzugt 0,5-5 Mol-% pro Mol Monomereinheit.

Der Verbrauch an Ozon pro Doppelbindung im Ausgangsprodukt liegt erfindungsgemäß zwischen 1-10 Mol, bevorzugt 1-5 Mol.

Die Gesamtmenge an erfindungsgemäß jeweils einzusetzendem Ozon ist 0,25-180 Gew.-%, besonders bevorzugt 0,5-25 Gew.-% bezogen auf Ausgangsprodukt.

Nach erfolgter Ozonbehandlung wird die entstandene Lösung, gegebenenfalls nach Filtration zur Entfernung von Fremdkörpern oder geringen Mengen vernetzter Anteile, eingedampft, wobei das Lösungsmittel nahezu vollständig zurückgewonnen wird. Vor der Filtration kann die Lösung gegebenenfalls mit einem festen Adsorbens wie z.B. Aktivkohle zur weiteren Verbesserung der Farbe des Endprodukts behandelt werden. Die Lösung kann aber auch ohne Eindampfschritt als solche für weitere Reaktionen in der organischen Chemie eingesetzt werden.

Die Endprodukte der Ozonbehandlung haben eine hohe Reinheit und definierte Carboxyl-Funktionalitäten von 0,5 bis 5, bevorzugt zwischen 0,8 und 4 Mol Carboxylgruppen pro Mol Polymer. Die Funktionalität kann durch Vergleich des über Methoden zur absoluten Molmassenbestimmung, z.B. Gelpermeationschromatographie,bestimmbaren Zahlenmittelmolekulargewichts $\overline{M}_n$ mit der über Titration erhältlichen Säurezahl (in mg KOH pro g Polymer) erhalten werden. Die Säurezahl der Produkte ist vom Gehalt an Dien im Copolymeren und dem gewählten Ozonüberschuß abhängig. Sie liegt wie bereits erwähnt zwischen 2 und 250 mg KOH/g, bevorzugt zwischen 5 und 100 mg KOH/g, besonders bevorzugt zwischen 5 und 60 mg KOH/g.

Bei Anwendung eines ausreichenden Ozonüberschusses sind Produkte erhältlich, deren Carboxylgruppengehalt dem aus dem Diengehalt errechneten entsprechen, wobei angenommen wird, daß im Falle von in 2- oder 3-Stellung substituierten Dienen, wie z.B. Isopren jede Dieneinheit eine Carboxylgruppe, im Falle von in 2,3-Stellung unsubstituierten Dienen wie z.B. Butadien, jede Dieneinheit zwei Carboxylgruppen liefert. Im ersten Fall ist die Anwesenheit von Ketogruppen im Endprodukt über die Absorption im Infrarotspektrum einer neutralisierten Probe bei 1720 cm$^{-1}$ nachweisbar. Die den Carboxylgruppen zugehörige Carboxylat-Absorption liegt bei 1560 cm$^{-1}$. Bei nicht neutralisierten Proben überlagern sich die Carbonyl- und Carboxyl-Absorptionen bei 1720-1700 cm$^{-1}$.

## Beispiele

## Beispiel 1

1 kg Isobutylen-Isopren-Kautschuk mit einem Isoprengehalt von 2,1 Mol-% und einer Mooney-Viskosität von 47 (ML8, 100°C) (Polysar Butyl 402, Handesprodukt der Bayer AG) werden in grobe Stücke (ca. 2 cm Durchmesser) zerkleinert und in 4 l Hexan suspendiert. In die Mischung wird unter Rühren bei 15 bis 25°C ein mit Ozon angereicherter Sauerstoffstrom (300 l/h, Ozonmenge ca. 10 g/h) eingeleitet, bis eine Säurezahl von 17 erreicht ist. Die erforderliche Einleitzeit beträgt hierfür 6 Stunden. Bezogen auf den Isoprengehalt im Butylkautschuk beträgt die eingeleitete Ozonmenge ca. 3 Mol pro Mol Isopren. Während des Einleitens lösen sich die festen Anteile vollständig auf. Nach Spülen mit Stickstoff wird kurz mit 5 g Aktivkohle ausgerührt, filtriert und das Lösemittel abdestilliert. Im IR-Spektrum des zurückbleibenden farblosen Öls erscheint eine starke Bande bei 1720 cm$^{-1}$. Nach Neutralisation können die Absorptionen für die Ketogruppe (1720 cm$^{-1}$) und die Carboxylatgruppen (1560 cm$^{-1}$) differenziert werden. Die am Vakuum vom Lösemittel befreite Probe besitzt ein Molgewicht Mn von 3600 (GPC-Analyse). Die Carboxylfunktionalität errechnet sich mit der bestimmten Säurezahl von 17 mg KOH/g zu 1,09 Mol COOH pro Mol Polymer.

## Beispiel 2

1 kg Isobutylen-Isopren-Kautschuk mit einem Isoprengehalt von 1,6 Mol-% und einer Mooney-Viskosität von 51 (ML8, 125°C) (Polysar Butyl 301, Handelsprodukt der Bayer AG) werden in grobe Stücke (ca. 2 cm Durchmesser) zerkleinert und in 4 l Methylenchlorid suspendiert. In die Mischung wird unter Rühren bei 10 bis 15°C ein mit Ozon angereicherter Sauerstoffstrom (50 l/h, Ozonmenge ca. 4 g/h) eingeleitet, bis eine Säurezahl von 14 erreicht ist. Die erforderliche Einleitzeit beträgt hierfür 8 Stunden. Während des Einleitens lösen sich die festen Anteile vollständig auf. Nach Spülen mit Stickstoff wird kurz mit 5 g Aktivkohle ausgerührt, Filtriert und das Lösemittel abdestilliert. Im IR-Spektrum des zurückbleibenden farblosen Öls erscheint eine starke Bande bei 1720 cm$^{-1}$. Nach Neutralisation können die Absorptionen für die Ketogruppe (1720 cm$^{-1}$) und die Carboxylatgruppen (1560 cm$^{-1}$) differenziert werden. Die am Vakuum vom Lösemittel befreite Probe besitzt ein Molgewicht Mn von 4400 (GPC-Analyse). Die Carboxylfunktionalität errechnet sich mit der bestimmten Säurezahl von 14 mg KOH/g zu 1,08 Mol COOH pro Mol Polymer.

## Beispiel 3

1 kg Isobutylen-Isopren-Kautschuk mit einem Isoprengehalt von 2,1 Mol-% und einer Mooney-Viskosität von 47 (ML8, 100°C) (Polysar Butyl 402, Handelsprodukt der Bayer AG) werden bei 40°C in 5 l Hexan gelöst (Lösezeit 14 Stunden). In die viskose Lösung wird unter Rühren bei 15 bis 25°C ein mit Ozon angereicherter Sauerstoffstrom (300 l/h, Ozonmenge ca. 10 g/h) eingeleitet, bis eine Säurezahl von 17 erreicht ist. Die erforderliche Einleitzeit beträgt hierfür 6 Stunden. Während des Einleitens sinkt die Viskosität schnell ab. Nach Spülen mit Stickstoff wird kurz mit 5 g Aktivkohle ausgerührt, filtriert und das Lösemittel abdestilliert. Im IR-Spektrum des zurückbleibenden farblosen Öls erscheint eine starke Bande bei 1720 cm$^{-1}$. Nach Neutralisation können die Absorptionen für die Ketogruppe (1720 cm$^{-1}$) und die Carboxylat-gruppen (1560 cm$^{-1}$) differenziert werden. Die am Vakuum vom Lösemittel befreite Probe besitzt ein Molgewicht Mn von 3600 (GPC-Analyse). Die Carboxylfunktionalität errechnet sich mit der bestimmten Säurezähl von 17 mg KOH/g zu 1,09 Mol COOH pro Mol Polymer.

**Beispiel 4**

1000 g vernetzter Isobutylen-Isopren-Kautschuk mit einem Isoprengehalt von 2,3 Mol-%, einem Divinylbenzolgehalt von 1,4 Mol-% und einer Mooney-Viskosität von 67 (ML8, 125°C) (Polysar Butyl XL10000, Handelsprodukt der Bayer AG) werden in grobe Stücke (ca. 2 cm Durchmesser) zerkleinert und in 4 l Hexan suspendiert. In die Mischung wird unter Rühren bei 15 bis 25°C ein mit Ozon angereicherter Sauerstoffstrom (300 l/h, Ozonmenge ca. 10 g/h) eingeleitet bis eine Säurezahl von 43 erreicht ist. Die erforderliche Einleitzeit beträgt hierfür 10 Stunden. Während des Einleitens lösen sich die festen Anteile vollständig auf. Nach Spülen mit Stickstoff wird kurz mit 5 g Aktivkohle ausgerührt, filtriert und das Lösemittel abdestilliert. Im IR-Spektrum des zurückbleibenden farblosen Öls erscheint eine starke Bande bei 1720 cm$^{-1}$. Nach Neutralisa-tion können die Absorptionen für die Ketogruppe (1720 cm$^{-1}$) und die Carboxylatgruppen (1560 cm$^{-1}$) differenziert werden. Die am Vakuum vom Lösemittel befreite Probe besitzt ein Molgewicht Mn von 3800 (GPC-Analyse). Die Carboxylfunktionalität errechnet sich mit der bestimmten Säurezahl von 43 mg KOH/g zu 2,9 Mol pro Mol Polymer. Aus dem Vergleich der experimentell über HPGPC/Staudruckviskosimetrie ermittelten Beziehung zwischen Standinger-Index und Molekulargewicht und der Mark-Houwink-Beziehung Für lineares Polyisobutylen folgt, daß das Produkt über den ganzen Molmassenbereich langkettenverzweigt ist.

**Beispiel 5**

1 kg Isobutylen-Isopren-Kautschuk mit einem Isoprengehalt von 0,7 Mol-% und einer Mooney-Viskosität von 45 (ML1+8, 100°C) (Polysar Butyl 100, Handelsprodukt der Bayer AG) werden in grobe Stücke (ca. 2 cm Durchmesser) zerkleinert und in 4 l n-Octan suspendiert. In die Mischung wird unter Rühren bei 0°C ein mit Ozon angereicherter Sauerstoffstrom (50 l/h, Ozonmenge ca. 4 g/h) eingeleitet, bis eine Säurezahl von 5,6 erreicht ist. Die erforderliche Einleitzeit beträgt hierfür 5 Stunden. Während des Einleitens lösen sich die festen Anteile vollständig auf. Nach Spülen mit Stickstoff wird kurz mit 5 g Aktivkohle ausgerührt, filtriert und das Lösemittel abdestilliert. Im IR-Spektrum des zurückbleibenden Öls erscheint eine starke Bande bei 1720 cm$^{-1}$. Nach Neutralisation können die Absorptionen für die Ketogruppe (1720 cm$^{-1}$) und die Carboxylatgruppen (1560 cm$^{-1}$) differenziert werden. Die am Vakuum vom Lösemittel befreite, farblose Probe besitzt ein Molgewicht $M_n$ von 11.000, $M_w$ von 20.900 und eine molekulare Uneinheitlichkeit U von 0,9 (GPC-Analyse). Die Carboxylfunktionalität errechnet sich mit der bestimmten Säurezahl von 5,6 mg KOH/g zu 1,1 Mol COOH pro Mol Polymer.

**Beispiel 6**

1 kg Isobutylen-Isopren-Kautschuk mit einem Isoprengehalt von 2,7 Mol-% werden in grobe Stücke (ca. 2 cm Durchmesser) zerkleinert und in 4 l n-Octan suspendiert. In die Mischung wird unter Rühren bei 0°C ein mit Ozon angereicherter Sauerstoffstrom (50 l/h, Ozonmenge ca. 4 g/h) eingeleitet, bis eine Säurezahl von 21 erreicht ist. Die erforderliche Einleitzeit beträgt hierfür 15 Stunden. Während des Einleitens lösen sich die festen Anteile vollständig auf. Nach Spülen mit Stickstoff wird kurz mit 5 g Aktivkohle ausgerührt, filtriert und das Lösemittel abdestilliert. Im IR-Spektrum des zurückbleibenden Öls erscheint eine starke Bande bei 1720 cm$^{-1}$. Nach Neutralisation können die Absorptionen für die Ketogruppe (1720 cm$^{-1}$) und die Carboxylatgruppen (1560 cm$^{-1}$) differenziert werden. Die am Vakuum vom Lösemittel befreite, farblose Probe besitzt ein Molgewicht $M_n$ von 2800, $M_w$ von 5300 und eine molekulare Uneinheitlichkeit U von 0,9 (GPC-Analyse). Die Carboxylfunktionalität errechnet sich mit der bestimmten Säurezahl von 21 mg KOH/g zu 1,05 Mol COOH pro Mol Polymer.

**Patentansprüche**

1. Verfahren zur Herstellung von Polyisobutylen-Carbonsäuren mit mittleren Molekulargewich-ten $\overline{M}n$ (Zahlenmittel) von 300 bis 20000 und mit einem Gehalt an Carbonsäuregruppen zwischen 0,5 Mol und 5 Mol, bezogen auf 1 Mol Polyisobutylen-Carbonsäure, dadurch gekennzeichnet, daß man hochmolekulare Isobutylen-Dien-Copolymere, die 0,3 Mol-% bis 15 Mol-% Dien einpolymerisiert enthalten, pro Mol Isobutylen-Monomer, und die gegebenenfalls mittels eines Diolefins in bekannter Weise vernetzt oder verzweigt sind, mit 0,3 Mol-% bis 50 Mol-% Ozon bei Temperaturen von -100°C bis +70°C in Gegenwart eines Lösungsmittels für die sich bildende Polyisobutylen-carbonsäure umsetzt.

2. Verfahren zur Herstellung von vernetzten oder verzweigten Polyisobutylen-Carbonsäuren gemäß Anspruch 1, dadurch gekennzeichnet, daß man Isobutylen-Dien-Copolymere, die mittels eines Diolefins in Mengen von 0,1 Mol-% bis 10 Mol-%, bezogen auf 1 Mol Isobutylen-Monomer, vernetzt oder verzweigt sind, umsetzt.

3. Vernetzte oder verzweigte Polyisobutylen-Carbonsäuren, erhältlich nach dem Verfahren des Anspruchs 2.